# EUROPÄISCHE PATENTSCHRIFT

(11) **EP 1 583 415 B1**
(45) Veröffentlichungstag und Bekanntmachung des Hinweises auf die Patenterteilung: **12.11.2008**
(21) Anmeldenummer: 04701892.4
(22) Anmeldetag: 14.01.2004
(51) Int. Cl.: A01G 25/16

(54) **ENERGIEAUTARKER SENSOR**
SENSOR
CAPTEUR

(30) Priorität: 17.01.2003 DE 10301678
(43) Veröffentlichungstag der Anmeldung: 12.10.2005
(73) Patentinhaber: EnOcean GmbH, 82041 Oberhaching (DE)
(72) Erfinder: BULST, Wolf-Eckhart, 81739 München (DE); SCHMIDT, Frank, 82054 Altkirchen (DE); SCZESNY, Oliver, 85609 Aschheim (DE)
(74) Vertreter: Epping - Hermann - Fischer
(86) Internationale Anmeldenummer: PCT/DE2004/000034
(87) Internationale Veröffentlichungsnummer: WO 2004/065908

(56) Entgegenhaltungen:
- GB-A- 2 320 572
- US-A- 5 601 236
- BULT K ET AL: "LOW POWER SYSTEM FOR WIRELESS MICROSENSORS" PROCEEDINGS OF INTERNATIONAL SYMPOSIUM ON LOW POWER ELECTRONICS AND DESIGN, XX, XX, 12. August 1996 (1996-08-12), Seiten 17-21, XP001013406
- A. CHANDRAKASAN ET AL: "POWER AWARE WIRELESS MICROSENSOR SYSTEMS" ESSCIRC, [Online] September 2002 (2002-09), XP002288893 FLORENCE, ITALY Gefunden im Internet: URL:http://www.mit.edu/~rmin/research/chan d-esscirc02.pdf> [gefunden am 2004-07-16]
- V. RAGHUNATHAN ET AL: "Energy-Aware Wireless Microsensor Networks" IEEE SIGNAL PROCESSING MAGAZINE, März 2002 (2002-03), Seiten 40-50, XP002288894

## Beschreibung

Die Erfindung betrifft einen Sensor zur Erfassung von physikalischen Umgebungsparametern, mit zumindest einem Sensorelement, einem Speicherelement und einer Steuerschaltung.

Sensoren, auch energieautarke Sensoren, zur Erfassung von Meßwerten und anderen physikalischen Größen sind z. B. aus der EP 0918212 A1 bekannt. Daraus sind Sensoren, die Meßwerte erfassen und die Meßwerte an eine insbesondere zentrale und rechnergestützt arbeitende Auswerteeinrichtung weiterleiten bekannt. Um dabei eine aufwendige kostenintensive und optisch eher nachteilige Verkabelung und eine, bei Batterie und Akkumulatorbetrieb begrenzte Betriebszeit und einem dadurch begründeten Wechsel bzw. Aufladen der Stromquelle in regelmäßigen Intervallen zu vermeiden, sind dort Sensoren, insbesondere Temperatursensoren vorgeschlagen, die Meßwerte erfassen und die Meßwerte an eine insbesondere zentrale und rechnergestützt arbeitende Auswerteeinrichtung weiterleiten, wobei die Weiterleitung der Meßwerte mittels Funkübertragung von einer mit dem Sensor verbundenen und eine Antenne aufweisende Sendeeinrichtung zu einer Auswerteeinrichtung erfolgt und die Sendeeinrichtung von einem, die im Umfeld befindliche Energie umwandelnden Stromerzeuger, mit elektrischer Energie versorgt wird.

Zur Erfassung von physikalischen Größen, deren Energie nicht sinnvoll in elektrische Energie umgewandelt werden kann, so daß der Sensor damit betrieben werden kann, wie z. B. Feuchte, ist es erforderlich andere Energieformen, die am Standort eines Sensors vorhanden sind, in elektrische Energie umzuwandeln, oder Energiespeicher wie z. B. Batterien oder Akkumulatoren an der Stelle vorzusehen. Bei zum Beispiel einer Messung von Feuchte in der unmittelbaren bodennahen Umgebung einer Pflanze, kann weder von ausreichender thermischer oder kinematischer Energie zur Umwandlung in elektrische Energie ausgegangen werden, so daß an dieser Stelle zum Beispiel Licht, bzw. Solarenergie zur Umwandlung in elektrische Energie dienen muss.

Druckschrift US 5,601,236 A zeigt eine Vorrichtung zur Befeuchtung und Wachstumsförderung von Pflanzen, wobei in dieser Vorrichtung auch ein Feuchtesensor, ein Energiespeicher, ein Solarmodul und eine Steuerschaltung vorzufinden ist, und ein externer Timer ein Controllerprogramm startet, das die im System bzw. im Energiespeicher verbliebene Ladungsmenge erfasst und die von den Solarzellen aktuell gelieferte Ladung bestimmt, woraus festgestellt wird, ob ausreichend Energiekapazitäten vorhanden sind, um die verschiedenen Module des Gesamtsystems in Betrieb zu nehmen. Wenn nicht ausreichend Energie vorhanden ist, wird der externe Timer wieder um eine weitere Periode zurückgesetzt und das Controllerprogramm versetzt alle Module wieder in einen Sleepmodus bis das Zeitintervall erneut abgelaufen ist und die Prüfung von Neuem beginnt.

Druckschrift GB 2320572 A zeigt einen Pflanzenfeuchtigkeitsdetektor mit einer Solarzelle, die einen Oszillator betreibt, der wiederum über zwei getrennt verlaufende Leitungen den kapazitiven und/oder den ohmschen Widerstand des Bodens erfasst. Dieser Wert ist Maß für die Feuchtigkeit des Bodens.

Die von Bult, K. et al. veröffentlichte Druckschrift "Low Power System for Wireless Microsensors" Proceedings of International Symosium on Low Power Electronics and Design, XX., XX, 12. August 1996, Seiten 17-21, XP001013406; zeigt allgemein ein Netzwerk aus drahtlosen Sensoren für- Anwendungen im Transportbereich, Produktionsbereich, biomedizinischem und Umweltbereich sowie für Sicherheitssysteme. Zahlreiche Mikrosensoren mit sehr niedrigem Energieverbrauch sind über eine Funkverbindung mit einer zentralen Auswertestation verbunden.

Die von Chandrakasan, A. et al veröffentlichte Druckschrift "Power Aware Wireless Microsensor Systems" ESSCIRC, September 2002, XP002288893 Florence, Italy; zeigt einen Low Power Transmitter mit einer kurzen Startzeit, wodurch die pro übertragenes Bit einer Funkverbindung benötigte Energie verringert wird.

Ein System zur Messung von Feuchte mit einer Funkübertragung der Meßwerte an eine zentrale Auswerteeinrichtung und mit einer Energieversorgung an den Sensoren mit Solarenergie ist in US 4,396,149 vorgeschlagen. Dabei erfolgt eine kontinuierliche Messung durch den Sensor, sowie eine kontinuierliche Energieversorgung durch ein fotovoltaisches Element. Zur ausreichender Energieversorgung des Sensorelementes mit Funkübertragung und zur kontinuierlichen Messung sind fotovoltaische Elemente von ausreichender Größe vorzuhalten. Dies ist nicht für alle Anwendungsfälle gewünscht und vorteilhaft. Soll ein Sensorelement klein, unauffällig und zuverlässig seinen Dienst, insbesondere auch in lichtschwachen Zeiten, wie z. B. Nacht verrichten, so eignet sich weder die Vorrichtung nach EP 0918212 A1 noch die Vorrichtung nach US 4,396,149.

Es ist daher die Aufgabe der Erfindung zur Erfassung von physikalischen Größen einen energieautarken Sensor vorzuschlagen, der auch dann zuverlässig und regelmäßig zur Erfassung physikalischer Größen in der Lage ist, wenn am Messort nur schwache oder zeitweise keine Versorgung von in elektrische Energie wandelbarer Primärenergie wie z B. Licht verfügbar ist.

Diese Aufgabe wird erfindungsgemäß gelöst, durch einen Sensor zur Erfassung von physikalischen Umgebungsparametern, mit
- einem Speicherelement zur Speicherung von elektrischer Energie
- einen Sensorelement zur Erfassung der physikalischen Umgebungsparameter,
- einer Steuerschaltung zur Codierung der erfaßten physikalischen Umgebungsparameter,
- einem fotovoltaischem Element (2) das zur Energieversorgung des Sensors (1) das an das Speicherelement (3) angeschlossen ist,
wobei eine Timerschaltung, die mit dem Erreichen einer vorbestimmten elektrischen Spannung an dem Speicherelement aktiviert wird und in vorbestimmten Zeitintervallen den Sensor und die Steuerschaltung aktiviert und nach kurzer Betriebszeit deaktiviert, so daß eine Zeitdauer eines Sensorbetriebes und einer Sensorbetriebspause entsteht.

Es ist vorteilhaft, besonders im Hinblick auf die Einsparung der zur Verfügung stehenden Energie, die Zeitdauer des Sensorbetriebes deutlich geringer ist als die Zeitdauer der Sensorbetriebspause zu gestalten.

Eine vorteilhafte Ausführungsform ist ein Sensor, welcher Informationen an andere Einrichtungen wie z. B. an eine stromnetzgebundene Bewässerungssteuerung oder an ein Busssystem weitergibt. Die Energie zum Betreiben des Sensors und der zugehörigen Funkschaltung wird aus dem Umgebungslicht geliefert, so daß keine Batterie zum Betreiben erforderlich ist. Zur Übertragung der Information sind sowohl draht-, als auch funkgebundene Systeme Einsetzbar. Der Einsatz von funkgebundener Informationsübertragung, vom erfindungsgemäßen Sensor zu einer anderen Einrichtung, beinhaltet den Vorteil, daß zum Beispiel keine Übertragungsleitungen zwischen der anderen Einrichtung und den Sensoren anzuordnen sind.

Ein fotovoltaisches Element erzeugt eine elektrische Spannung bei Lichteinfall, zur Energieversorgung des Sensors. Dieses fotovoltaische Element ist so dimensioniert, daß auch bei kleinen Beleuchtungsstärken eine Spannung von ca. 2 Volt abgegeben wird. Da die gelieferte Leistung im allgemeinen für einen Dauerbetrieb des Sensors nicht ausreicht, wird zunächst ein Speicherelement, vorzugsweise ein Kondensator oder ein elektrochemischer Energiespeicher mit elektrischer Energie aufgeladen.

Erreicht die elektrische Spannung an dem Speicherelement ein vorbestimmtes Niveau, wird eine Timerschaltung aktiviert, welche in vorbestimmten Abständen den gesamten Sensor aktiviert und deaktiviert. In einer vorteilhaften Ausführungsform sind die Zeitabstände zur Aktivierung und Deaktivierung des Sensors variabel und bei jeder Aktivierung durch die Steuerschaltung neu bestimmbar. Dazu wird insbesondere der Ladezustand des Speicherelementes, so wie wahlweise die Beleuchtungsstärke über der Solarzelle abgefragt. Beide, oder auch nur einer der beiden Parameter fließt in die neue Bestimmung der Zeitabstände ein. Damit sind möglichst lange Betriebsdauern des Sensors auch in Dunkelphasen, das heißt in Phasen in denen keine Energieversorgung durch Umgebungsenergie möglich ist, realisierbar.

Desweiteren ist zusätzlich durch das fotovoltaische Element eine Messung der Beleuchtungsstärke bei jeder Aktivierung des Sensors möglich. Zusammen mit einer ID-Nummer des Sensors, dem Wert des Meßfühlers, zum Beispiel des Feuchtemeßfühlers, ist die Beleuchtungsstärke übertragbar.

In einer vorteilhaften Ausführungsform wird von einem Hochfrequenzsender und eine an diesem angeschlossene Antenne die codierte Information abgestrahlt und an andere Einrichtungen übermittelt. Zur Erhöhung der Übertragungssicherheit ist das Funksignal dieser Übertragung vorteilhafterweise redundant aufgebaut, das heißt die Abstrahlung erfolgt mit großer Bandbreite und/oder in einer zeitlichen Abfolge.

Das Funksignal ist von allen in der Nähe befindlichen zugeordneten Hochfrequenzempfängern empfangbar und wird ausgewertet. Nach der Auswertung reagieren daran angeschlossene adressierbare Empfängersysteme und veranlassen wiederum eine Aktion, wie z. B. das öffnen einer Bewässerungseinrichtung und/oder steuern eine optische oder akustische Meldeeinrichtung an und/oder speisen die Meßdaten in ein System zur weiteren Speicherung und/oder Verarbeitung der Meßdaten.

Im folgenden wird die Erfindung anhand eines Ausführungsbeispiels unter Bezugnahme auf die Figuren näher erläutert.

Es zeigen:
- Figur 1: ein Ausführungsbeispiel der vorliegenden Erfindung in einer schematischen Darstellung,
- Figur 2: eine Ausgestaltung des Sensor 1 mit fotovoltaischem Element 2,
- Figur 3: eine zusätzliche Ausgestaltung des in Figur 2 dargestellten Sensors mit einem Hochfrequenzsender 6,
- Figur 4: eine Empfangseinrichtung 8 in einer schematischen Darstellung,
- Figur 5: ein Ausführungsbeispiel des Sensors 1 als Feuchtesensor.

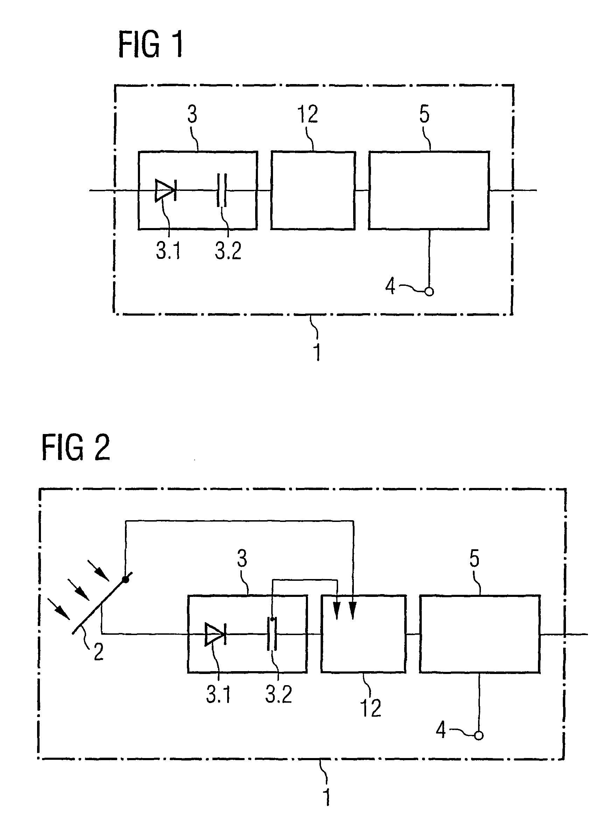

Figur 1 zeigt einen Sensor 1 in einer schematischen Darstellung, wobei die Speicherung einer dem Sensor 1 zugeführten elektrischen Ladung in einem Speicherelement 3 erfolgt. Dieses ist vorzugsweise aus einem verlustarmen Kondensator hoher Kapazität gebildet. Vorteilhafterweise enthält das Speicherelement 3 eine Speicherschaltung 3.1. Diese besteht in einem einfachen Fall zum Beispiel aus einer Halbleiterdiode oder einer Gleichrichterschaltung. In Figur 1 ist dies symbolisch durch das Symbol einer Diode dargestellt. Die Speicherschaltung 3.1 verhindert dabei ein Rückfließen von Ladungen aus dem Speicherelement 3 zurück zu einer angeschlossenen Energieversorgungseinrichtung, die in Figur 1 nicht dargestellt ist. Eine weitere optionale Funktion der Speicherschaltung-3.1 ist eine Anpassung der Impedanz zwischen einer Energieversorgungseinrichtung und dem Speicherelement 3.

In einer in Figur 2 dargestellten Ausführungsform ist ein fotovoltaisches Element 2 als Energieversorgungseinrichtung anschlossen. Das fotovoltaische Element 2 ist vorzugsweise so klein gewählt, daß ein Höchstmaß an Flexibilität in Bezug auf die Wahl des Einsatzortes erreichbar ist. Damit ist ein direkter Betrieb des Sensors 1 mit dem fotovoltaischem Element 2 unmöglich. Die durch das fotovoltaische Element 2 gelieferte Energie wird zum Betrieb des Sensors 1 in einer Speichereinrichtung gesammelt. In dem in Figur 2 dargestellten Ausführungsbeispiel wird durch die Lichteinstrahlung auf das fotovoltaische Element 2 ein Speicherelement 3 mit elektrischer Ladung versorgt und aufgefüllt.

Die Dimensionierung des verlustarmen Kondensators 3.2 der Speichereinrichtung 3 ist in Zusammenhang mit dem fotovoltaischen Element oder einer anderen Energieversorgungseinrichtung so gewählt, daß auch extreme Dunkelphasen wie sie beispielsweise nachts, insbesondere während der Wintermonate auftreten können, sicher überbrückt werden können, d. h. daß das Speicherelement 3 über das photovoltaische Element 2 soviel Energie geliefert bekommt und auch speichern kann, damit ein Timerbetrieb und ein in Zeitintervallen stattfindender Sensorbetrieb auch während der Dunkelphase erfolgen kann.

Die in Figur 1 dargestellte Timerschaltung 12 ist in ULP-Technik (ultra low power technic) ausgeführt, so daß sie mit extrem geringen Energieaufwand funktionsfähig ist. Dazu ist die Timerschaltung 12 in Analog- oder Digitaltechnik ausgeführt. Die Timerschaltung 12 ist als einzige Komponente des Sensors 1 in ständigem Betrieb. Die Timerschaltung 12 aktiviert in regelmäßigen vorbestimmten Zeitabständen die Steuerschaltung 5 mit den angeschlossenen Sensorelementen 4. Dabei ist die Zeitdauer einer Betriebsphase des Sensors 1 deutlich kleiner als die Zeitdauer einer Betriebspause des Sensors 1.

In einer in Figur 2 dargestellten vorteilhaften Ausführungsform, aktiviert die Timerschaltung 12 in Abhängigkeit vom Ladezustand des Speicherelementes 3 und wahlweise zusätzlich auch in Abhängigkeit der Beleuchtungsstärke am fotovoltaischen Element 2 die Steuerschaltung 5 sowie das Sensorelment 4. Als Sensorelement 4 zur Erfassung der physikalischen Größe eignet sich jedes Sensorelement, das eine physikalische Größe gewandelt in ein elektrisches Signal an die Steuerschaltung 5 weiterzugeben in der Lage ist.

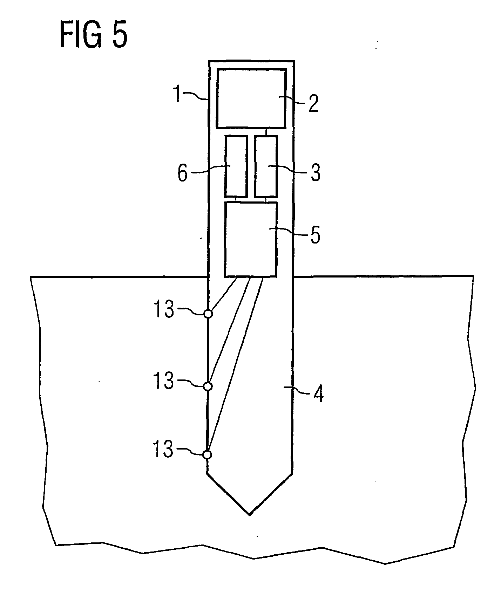

In einer in Figur 5 dargestellten beispielhaften Ausführungsform ist zur Messung der Feuchte insbesondere zur Messung der Bodenfeuchte vorzugsweise eine Impedanzmessung des Bodens mit mehreren, zumindest aber zwei Elektroden vorgesehen.

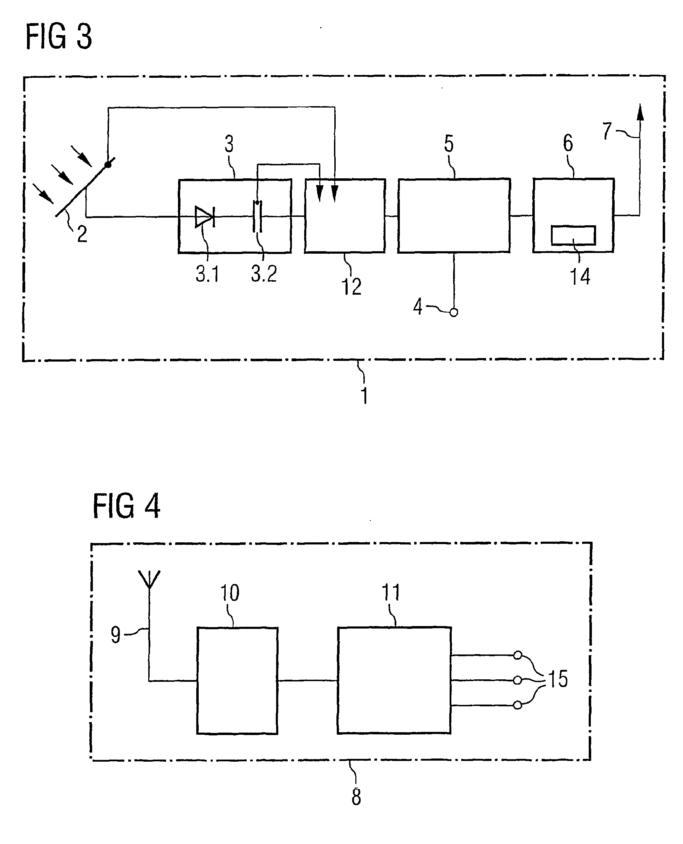

Figur 3 zeigt eine schematische Darstellung einer vorteilhaften Ausführungsform zur funkgebundenen Übertragung des von dem Sensor 1 erfassten Informationen. Dabei aktiviert die Timerschaltung 12 in Abhängigkeit vom Ladezustand des Speicherelementes 3 und wahlweise zusätzlich auch in Abhängigkeit der Beleuchtungsstärke am fotovoltaischen Element 2 die Steuerschaltung 5 sowie das Sensorelement 4 und einen Hochfrequenzsender 6. Der Hochfrequenzsender 6 ist vorzugsweise mit einem Hochfrequenzoszillator 14, der ein sehr schnelles Anschwingverhalten aufzeigt ausgestattet. Als frequenzbestimmendes Bauteil bietet sich hierbei ein Oberflächenwellenresonator an. Der Hochfrequenzsender moduliert die vom Sensor 1 erfassten Informationen einem hochfrequenten Signal auf.

Um den Energieverbrauch des Hochfrequenzsenders 6 gering zu halten ist dieser auf geringen Stromverbrauch ausgelegt und arbeitet mit einer hohen Bandbreite, um die Sendedauer klein zuhalten. Dadurch ergibt sich auf Grund der hohen Bandbreite eine kurze Sendezeit und damit ein erweiterter geringer Energieverbrauch. Die Abstrahlung des Hochfrequenzsignals erfolgt über die am Hochfrequenzsender 6 angeschlossene Antenne 7.

Figur 4 stellt eine Empfangseinrichtung 8 zum Empfang der vom Hochfrequenzsender abgestrahlten Informationen dar, wobei diese zum Empfang des Hochfrequenzsignals zumindest eine Antenne 9 aufweist und ein an diese Antenne 9 angeschlossenen Hochfrequenzempfänger 10. Dieser empfängt die vom Sensor 1 ausgesendeten Signale, demoduliert sie und leitet diese an eine Auswerteeinrichtung 11 weiter. Die Auswerteeinrichtung 11 verfügt über Anschlüsse 15 an denen weitere Systeme oder Aktoren angeschlossen sind. Dies sind zum Beispiel Bewässerungssysteme, oder Meldesysteme oder andere Systeme.

Zur Datenübertragung finden vorzugsweise fehlertolerante Übertragungsverfahren wie Parity-Check, Forward-Error-Correction oder blockorientierte Redundanzverfahren Anwendung. Es bietet sich des weiteren die Möglichkeit, die übertragenen Daten mit geeigneten elektronischen Schlüsseln zu verschlüsseln. Es erfolgt die Datenübertragung in einer sehr kurzen Zeit und in vorbestimmten Zeitabständen. Dabei ist die Sendezeit gegenüber der sendefreien Zeit deutlich geringer. Damit ist die Kollisionswahrscheinlichkeit von 2 gleichzeitig sendenden Sensoren 2 deutlich herabgesetzt.

Als Dateninhalte zur Übertragung bieten sich nicht nur der gemessene physikalische Parameter, sondern auch weitere am Sensor 1 anliegende Informationen dar, wie z. B. eine ID-Nummer des Sensors 1. Die am Sensor 1 anliegende Temperatur, die Beleuchtungsstärke am Sensor 1 zum Zeitpunkt der Übertragung der am Sensor 1 anliegende Wasserstand und verschiedenes mehr.

Figur 5 zeigt in einer Ausführungsform einen stabförmigen Sensor 1 mit einem fotovoltaischem Element 2, einem Speicherelement 3, einer Steuerschaltung 5 und einem Hochfrequenzsender 6, der mit seinen Meßelektroden 13 zur Messung der Bodenfeuchte über eine Impedanzmessung in ein Boden bzw. Wasserreservoir eingebracht ist. Zur Impedanzmessung wird dazu vorzugsweise modulierter Gleichstrom oder Wechselstrom eingesetzt, wobei bei einer Verwendung von Wechselstrom mindestens eine, vorzugsweise jedoch mehrere Frequenzen zum Einsatz gelangen. Diese Art der Impedanzmessung gestattet eine Ermittlung der Bodenfeuchte mit deutlich verbesserter Unabhängigkeit von den Bodeneigenschaften als eine reine Gleichstrommessung.

### Bezugszeichenliste

- 1: Sensor
- 2: fotovoltaisches Element
- 3: Speicherelement
- 3.1: Gleichrichteelement
- 3.2: Speicherzelle
- 4: Sensorelement
- 5: Steuerschaltung
- 6: Hochfrequenzsender
- 7: Antenne
- 8: Empfangseinrichtung
- 9: Antenne
- 10: Hochfrequenzempfänger
- 11: Auswerteeinrichtung
- 12: Timerschaltung
- 13: Meßelektroden
- 14: Oberflächenwellenresonator
- 15: Anschluß

## Patentansprüche

1. Energieautarker Sensor (1) zur Erfassung von physikalischen Umgebungsparametern, mit zumindest
- einem Speicherelement (3) zur Speicherung von elektrischer Energie,
- einem Sensorelement (4) zur Erfassung von physikalischen Umgebungsparametern,
- einer Steuerschaltung (5) zur Codierung der erfaßten physikalischen Umgebungsparameter,
- einem fotovoltaischem Element (2) das zur Energieversorgung des Sensors (1) an das Speicherelement (3) angeschlossen ist,
**gekennzeichnet durch**
eine Timerschaltung (12), die mit dem Erreichen einer vorbestimmten elektrischen Spannung an dem Speicherelement (3) aktiviert wird und in vorbestimmbaren Zeitintervallen das Sensorelement (4) und die Steuerschaltung (5) aktiviert und nach einer vorbestimmbaren Betriebszeit deaktiviert, so daß eine Zeitdauer eines Sensorbetriebes und einer Sensorbetriebspause entsteht.

2. Sensor (1) nach Anspruch 1,
**dadurch gekennzeichnet, daß**
die Zeitdauer des Sensorbetriebes deutlich geringer ist als die Zeitdauer der Sensorbetriebspause.

3. Sensor (1) nach Anspruch 1 - 2,
**dadurch gekennzeichnet, daß**
bei jeder Aktivierung der Steuerschaltung (5) das Zeitinterval zur Aktivierung der Steuerschaltung (5) in Abhängigkeit des Ladezustandes des Speicherelementes (3) neu bestimmt wird.

4. Sensor (1) nach Anspruch 1 - 3,
**dadurch gekennzeichnet, daß**
die Zeitintervalle auch in Abhängigkeit der zur Aktivierungszeit vorliegenden Beleuchtungsstärke am fotovoltaischen Element (2) neu bestimmt werden.

5. Sensor (1) nach Anspruch 4,
**dadurch gekennzeichnet, daß**
das photovoltaische Element (2) kleiner dimensioniert ist, als es ein direkter Betrieb des Sensors (4) mit Steuerschaltung (5) erfordert.

6. Sensor (1) nach einem der vorhergehenden Ansprüche,
**dadurch gekennzeichnet, daß**
ein Hochfrequenzsender (6) zur Erzeugung eines Hochfrequenzsignals bzw. Funktelegramms, integriert ist.

7. Sensor (1) nach einem der vorhergehenden Ansprüche,
**dadurch gekennzeichnet, daß**
das Speicherelement (3) ein Kondensator und/oder ein elektrochemischer Energiespeicher ist.

8. Sensor (1) nach einem der vorhergehenden Ansprüche,
**dadurch gekennzeichnet, daß**
das Sensorelement als physikalischen Umgebungsparameter die Feuchte erfasst.

9. Sensor (1) nach einem der vorhergehenden Ansprüche,
**dadurch gekennzeichnet, daß**
eine Feuchtemessung über eine Impedanzmessung mit zumindest 2 Elektroden (13) vorgenommen wird:

10. Sensor (1) nach einem der Ansprüche 6 - 9,
**dadurch gekennnzeichnet, daß**
der Hochfrequenzsender (6) eine sehr kurze Einschwingzeit aufweist.

11. Sensor (1) nach Anspruch 6 - 10
**dadurch gekennzeichnet, daß**
ein Oberflächenwellenresonator (14) das frequenzbestimmende Bauteil des Hochfrequenzsenders (6) ist.

12. Sensor (1) nach Anspruch 6 - 11,
**dadurch gekennzeichnet, daß**
der Hochfrequenzsender (6) mit einer hohen Bandbreite sendet.

## Claims

1. A self-powered sensor (1) for registering physical environmental parameters, having at least
- a storage element (3) for storing electrical energy,
- a sensor element (4) for registering physical environmental parameters,
- a control circuit (5) for encoding the physical environmental parameters that have been registered,
- a photovoltaic element (2) that is connected to the storage element (3) in order to supply power to the sensor (1),
**characterized in that**
a timer circuit (12) that is activated when a specified electrical voltage is reached at the storage element (3), and which activates the sensor element (4) and the control circuit (5) at specified time intervals and deactivates them after a specified operating period, so creating a period of sensor operation and the pause in sensor operation.

2. A sensor (1) according to Claim 1,
**characterized in that**
the duration of the period of sensor operation is significantly shorter than the duration of the pause in sensor operation.

3. A sensor (1) according to Claims 1 - 2,
**characterized in that**
each time the control circuit (5) is activated, the duration of the period of activation of the control circuit (5) is dermined afresh according to the state of charge of the storage element (3).

4. A sensor (1) according to Claims 1 - 3,
**characterized in that**
the time interval is also dermined afresh in accordance with the luminous intensity at the photovoltaic element (2) at the time of activation.

5. A sensor (1) according to Claim 4,
**characterized in that**
the photovoltaic element (2) has smaller dimensions than would be required for direct operation of the sensor (4) with its control circuit (5).

6. A sensor (1) according to one of the foregoing claims,
**characterized in that**
a high frequency transmitter (6) is integrated for the generation of a high-frequency signal or of a radio telegram.

7. A sensor (1) according to one of the foregoing claims,
**characterized in that**
the storage element (3) is a capacitor and/or an electrochemical energy store.

8. A sensor (1) according to one of the foregoing claims,
**characterized in that**
the sensor element registers humidity as a physical environmental parameter.

9. A sensor (1) according to one of the foregoing claims,
**characterized in that**
a measurement of humidity is made by measuring impedance using at least two electrodes (13).

10. A sensor (1) according to one of Claims 6 - 9,
**characterized in that**
the high frequency transmitter (6) has a very short attack time.

11. A sensor (1) according to Claims 6 - 10
**characterized in that**
the component of the high-frequency transmitter (6) that determines the frequency is a surface wave resonator (14).

12. A sensor (1) according to Claims 6 - 11
**characterized in that**
the high-frequency transmitter (6) transmits with a high bandwidth.

## Revendications

1. Capteur auto-suffisant en énergie (1) permettant l'acquisition de paramètres physiques environnementaux et comportant au moins
- un élément de stockage (3) pour l'emmagasinement d'énergie électrique,
- un élément capteur (4) pour la détection de paramètres physiques environnementaux,
- un circuit de commande (5) pour l'encodage des paramètres physiques environnementaux captés,
- un élément photovoltaïque (2) connecté à l'élément de stockage (3) pour l'alimentation en énergie du capteur (1),
**caractérisé par**
un circuit de minuterie (12) activé lorsque la tension électrique de l'élément de stockage (3) atteint une valeur prédéterminée et qui active l'élément capteur (4) et le circuit de commande (5) à des intervalles temporels réglables et les désactive après une durée de service réglable, de telle sorte qu'une durée de service du capteur et une durée de pause du capteur sont obtenues.

2. Capteur (1) selon la revendication 1,
**caractérisé en ce que**
la durée de service du capteur est nettement plus courte que la duré de pause du capteur.

3. Capteur (1) selon l'une des revendications 1 ou 2,
**caractérisé en ce que**
l'intervalle temporel d'activation du circuit de commande (5) est redéfini en fonction de l'état, de charge de l'élément de stockage (3) lors de chaque activation du circuit de commande (5).

4. Capteur (1) selon l'une des revendications 1 à 3,
**caractérisé en ce que**
les intervalles temporels sont également redéfinis en fonction de la puissance d'éclairage à laquelle est soumis l'élément photovoltaïque (2) lors de l'activation.

5. Capteur (1) selon la revendication 4,
**caractérisé en ce que**
le dimensionnement de l'élément photovoltaïque (2) est restreint lorsqu'il exige un fonctionnement direct du capteur (4) avec le circuit de commande (5).

6. Capteur (1) selon l'une quelconque des revendications précédentes,
**caractérisé en ce que**
un émetteur haute fréquence (6) est intégré pour générer un signal à haute fréquence ou un message radio.

7. Capteur (1) selon l'une quelconque des revendications précédentes,
**caractérisé en ce que**
l'élément de stockage (3) est un condensateur électrique et/ou un dispositif électrochimique de stockage d'énergie.

8. Capteur (1) selon l'une quelconque des revendications précédentes,
**caractérisé en ce que**
l'élément capteur détecte l'humidité en tant que paramètre physique environnemental.

9. Capteur (1) selon l'une quelconque des revendications précédentes,
**caractérisé en ce que**
une mesure d'humidité est effectuée au moyen d'une mesure d'impédance impliquant au moins 2 électrodes (13).

10. Capteur (1) selon l'une des revendications 6 à 9,
**caractérisé en ce que**
l'émetteur haute fréquence (6) présente un temps de stabilisation très réduit.

11. Capteur (1) selon l'une des revendications 6 à 10,
**caractérisé en ce que**
un résonateur d'onde de surface (14) est le composant déterminant la fréquence de l'émetteur haute fréquence (6).

12. Capteur (1) selon l'une des revendications 6 à 11,
**caractérisé en ce que**
l'émetteur haute fréquence (6) émet dans une bande de fréquence élevée.
